# EUROPEAN PATENT SPECIFICATION

(11) **EP 4 340 345 B1**
(45) Date of publication and mention of the grant of the patent: **22.04.2026**
(21) Application number: 23163382.7
(22) Date of filing: 22.03.2023
(51) Int. Cl.: H04N 1/00, H04N 1/195

(54) **IMAGE PROCESSING APPARATUS, PROGRAM, AND IMAGE PROCESSING METHOD**
BILDVERARBEITUNGSVORRICHTUNG, PROGRAMM UND BILDVERARBEITUNGSVERFAHREN
APPAREIL DE TRAITEMENT D'IMAGE, PROGRAMME ET PROCÉDÉ DE TRAITEMENT D'IMAGE

(30) Priority: 13.09.2022 JP 2022145653
(43) Date of publication of application: 20.03.2024
(73) Proprietor: FUJIFILM Business Innovation Corp., Minato-ku Tokyo (JP)
(72) Inventor: ICHINOWATARI, Yasushi, Yokohama-shi, Kanagawa (JP); NOGUCHI, Yuki, Yokohama-shi, Kanagawa (JP); OKUBO, Megumi, Yokohama-shi, Kanagawa (JP); HAGIWARA, Miki, Yokohama-shi, Kanagawa (JP)
(74) Representative: Kurig, Thomas

(56) References cited:
- JP-A- 2010 021 830
- US-A1- 2007 076 268
- US-A1- 2018 367 694
- US-A1- 2022 124 214

## Description

### BACKGROUND OF THE INVENTION

### (i) Field of the Invention

The present invention relates to an image processing apparatus, a program, and an image processing method.

### (ii) Description of Related Art

JP2005-086395A describes a mobile phone with a camera that is provided with a set of auxiliary light emitting units and can emit light as auxiliary light in a case of performing imaging by a plurality of imaging optical systems.
US 2022/124214 A1 discloses an image reading device and an image forming apparatus. The image reading device includes a scanned-image acquisition unit configured to scan a mounting table to obtain image data of a to-be-scanned object placed on the mounting table, a capturing unit configured to capture an image of the to-be-scanned object to obtain image data of the to-be-scanned object, and a shape measuring device configured to perform a shape measurement process to measure a shape of the to-be-scanned object placed on the mounting table based on the image data of the to-be-scanned object obtained by the scanned-image acquisition unit and the image data of the to-be-scanned object obtained by the capturing unit. The image forming apparatus includes the image reading device and an image recording unit configured to record an image on a recording material.

### SUMMARY OF THE INVENTION

An object of the present invention is to provide an image processing apparatus, a program, and an image processing method that eliminate an influence of light emission of a placement unit at a time of imaging a document.

The present invention is defined in the appended claims. The following disclosure serves a better understanding of the present invention. According to a first aspect of the present disclosure, there is provided an image processing apparatus including: a placement unit that is provided on an upper surface of a housing and on which a document is placed; an imaging unit that images the placement unit from above; a light emitting device that causes at least a part of the placement unit to emit light; and a processor configured to: control the light emitting device not to emit light, in a case where it is detected that the document is placed on the placement unit.

According to a second aspect of the present disclosure, there is provided the image processing apparatus according to the first aspect, in which the processor may be configured to: control the light emitting device to emit light, in a case where it is not detected that the document is placed on the placement unit.

According to a third aspect of the present disclosure, there is provided the image processing apparatus according to the first aspect or the second aspect, in which the light emission by the light emitting device may be light emission by blinking.

According to a fourth aspect of the present disclosure, there is provided the image processing apparatus according to any one of the first aspect to the third aspect, in which the processor may be configured to: control the light emitting device not to emit light, in a case where the image processing apparatus is not operated for a set time or longer.

According to a fifth aspect of the present disclosure, there is provided the image processing apparatus according to any one of the first aspect to the fourth aspect, in which the processor may be configured to: control the light emitting device not to emit light, in a case where a selection screen for selecting a function to be used in the image processing apparatus is displayed on a display unit.

According to a sixth aspect of the present disclosure, there is provided the image processing apparatus according to any one of the first aspect to the fifth aspect, in which the processor may be configured to: control the light emitting device not to emit light, in a case where an operating state of the image processing apparatus is a power saving state.

According to a seventh aspect of the present disclosure, there is provided the image processing apparatus according to the sixth aspect, in which the processor may be configured to: control the light emitting device to emit light, in a case where the operating state of the image processing apparatus returns to a normal operating state from the power saving state, it is detected that the document is placed on the placement unit, and it is set to image the document without receiving an instruction from a user.

According to an eighth aspect of the present disclosure, there is provided the image processing apparatus according to any one of the first aspect to the seventh aspect, in which the processor may be configured to: control the light emitting device not to emit light, until an authentication process of the user is completed, in a case where the image processing apparatus performs the authentication process.

According to a ninth aspect of the present disclosure, there is provided the image processing apparatus according to the eighth aspect, in which the processor may be configured to: control the light emitting device to emit light, in a case where the authentication process is completed, it is detected that the document is placed on the placement unit, and it is set to image the document without receiving an instruction from the user.

According to a tenth aspect of the present disclosure, there is provided a program for controlling an image processing apparatus including a placement unit that is provided on an upper surface of a housing and on which a document is placed, an imaging unit that images the placement unit from above, a light emitting device that causes at least a part of the placement unit to emit light, and a processor, the program causing a computer to execute a process including: controlling the light emitting device not to emit light, in a case where it is detected that the document is placed on the placement unit.

According to an eleventh aspect of the present disclosure, there is provided an image processing method for controlling an image processing apparatus including a placement unit that is provided on an upper surface of a housing and on which a document is placed, an imaging unit that images the placement unit from above, a light emitting device that causes at least a part of the placement unit to emit light, and a processor, the method including: controlling the light emitting device not to emit light, in a case where it is detected that the document is placed on the placement unit.

According to the image processing apparatus according to the first aspect, it is possible to eliminate the influence of light emission of the placement unit at a time of imaging a document.

According to the image processing apparatus according to the second aspect, in a case where the document is not placed on the placement unit, it is possible to prompt the user to place the document.

According to the image processing apparatus according to the third aspect, the light emission in the placement unit can be made conspicuous.

According to the image processing apparatus according to the fourth aspect, power saving of the apparatus can be achieved.

According to the image processing apparatus according to the fifth aspect, in a situation in which the document placed on the placement unit is not imaged, it is possible not to prompt the user to place the document.

According to the image processing apparatus according to the sixth aspect, power saving of the apparatus can be achieved.

According to the image processing apparatus according to the seventh aspect, in a situation in which the document placed on the placement unit can be imaged, it is possible to prompt the user to place the document.

According to the image processing apparatus according to the eighth aspect, power saving of the apparatus can be achieved.

According to the image processing apparatus according to the ninth aspect, in a situation in which the document placed on the placement unit can be imaged, it is possible to prompt the user to place the document.

According to the program according to the tenth aspect, it is possible to eliminate the influence of light emission of the placement unit at a time of imaging a document.

According to the image processing method according to the eleventh aspect, it is possible to eliminate the influence of light emission of the placement unit at a time of imaging a document.

### BRIEF DESCRIPTION OF THE DRAWINGS

Exemplary embodiment(s) of the present invention will be described in detail based on the following figures, wherein:
Figs. 1A and 1B are views showing an external appearance of an image forming apparatus according to an exemplary embodiment of the present invention, where Fig. 1A is a side view of the image forming apparatus and Fig. 1B is a front view of the image forming apparatus;
Fig. 2 is a top view showing the appearance of the placement unit and the light emitting device;
Fig. 3 is a top view for explaining the configurations of the placement unit and the light emitting device;
Fig. 4 is a front view for explaining the configurations of the placement unit and the light emitting device;
Fig. 5 is a block diagram showing a hardware configuration of the image forming apparatus;
Fig. 6 is a block diagram showing a functional configuration of the image forming apparatus;
Fig. 7 is a diagram showing an example of a selection screen; and
Fig. 8 is a flowchart showing a processing flow at the time of imaging a document in the image forming apparatus.

### DETAILED DESCRIPTION OF THE INVENTION

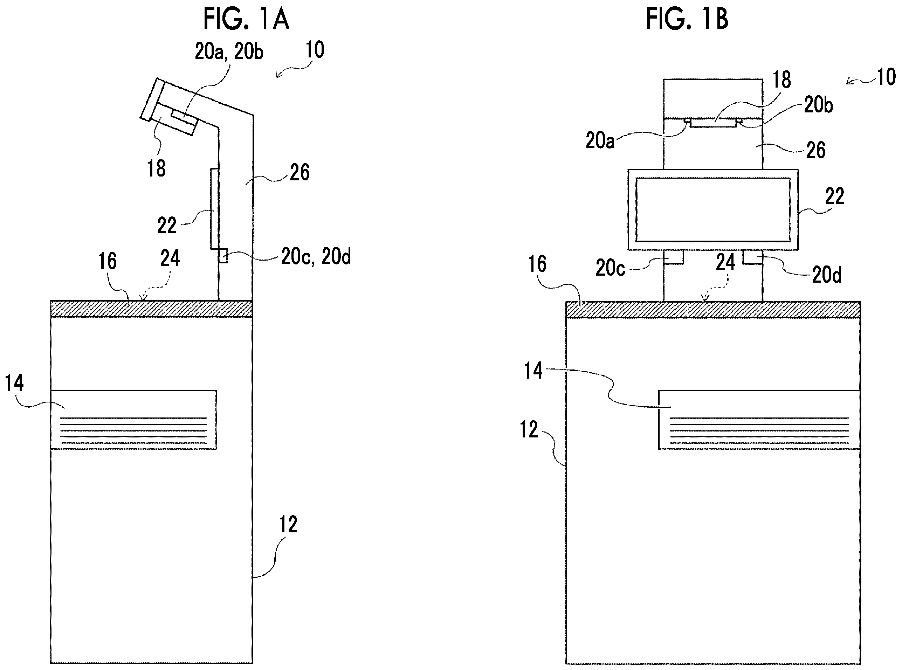

Hereinafter, an exemplary embodiment of the present invention will be described in detail with reference to the accompanying drawings. Figs. 1A and 1B are views showing an external appearance of an image forming apparatus 10 as an example of an image processing apparatus according to an exemplary embodiment of the present invention, where Fig. 1A is a side view of the image forming apparatus 10 and Fig. 1B is a front view of the image forming apparatus 10. The image forming apparatus 10 is an apparatus installed in an office such as a multifunction machine.

As shown in Figs. 1A and 1B, the image forming apparatus 10 includes an apparatus body 12, a discharge tray 14 as a medium discharge unit, a placement unit 16, an imaging device 18, an irradiation device 20 including four light sources 20a, 20b, 20c, and 20d, an operation panel 22, a light emitting device 24, or the like.

The discharge tray 14 is where paper, which is an example of a medium, is discharged. Further, the discharge tray 14 is provided at a position where the medium is taken out by the user in a standing state.

The placement unit 16 is a top surface of the apparatus body 12, to be described in detail later, and is disposed on an upper portion of the apparatus body 12. Further, the placement unit 16 is installed above the discharge tray 14 in the vertical direction. Further, the placement unit 16 is configured such that a document such as a paper, a business card, or a receipt can be placed.

Further, a document feeder having a double-sided simultaneous scanning function is provided inside the apparatus body 12 below the top plate of the placement unit 16. It is configured that the document feeder can be used by sliding a part of the top plate of the placement unit 16 in the plane direction.

The imaging device 18 includes an imaging element such as a charge coupled device (CCD), for example, and images a subject such as a document to acquire image data. The imaging device 18 is installed above the placement unit 16, and is configured to image the document placed on the placement unit 16 from above. Here, in a case where the upper surface of the placement unit 16 is used as the reference plane, the term "above the placement unit 16" is not limited to the position vertically above the reference plane, and means a position that is above in the vertical direction and is higher than the reference plane. The imaging device 18 is an example of an imaging unit in the technique of the present disclosure.

Further, a column 26 is provided on the top surface of the apparatus body 12 and on the back of the upper surface of the placement unit 16. The column 26 extends upward substantially perpendicular to the upper surface of the placement unit 16, and is provided with an end portion bent above the placement unit 16. The imaging device 18 is attached to an end portion of the column 26.

An image forming unit, which forms an image of a subject placed on the placement unit 16, is provided between the discharge tray 14 and the placement unit 16. That is, an image forming unit that forms an image on the paper discharged to the discharge tray 14 is provided above the discharge tray 14.

The irradiation device 20 includes one or more light sources such as, for example, a light emitting diode (LED), and includes, for example, the light sources 20a, 20b, 20c, and 20d. The light sources 20a, 20b, 20c, and 20d are provided on the column 26. That is, the light sources 20a, 20b, 20c, and 20d are provided above the placement unit 16.

Specifically, the light sources 20a and 20b are provided in the vicinity of the imaging device 18, downward on both sides of the imaging device 18 of the column 26. The light sources 20c and 20d are provided in the vicinity of the operation panel 22, obliquely downward on both sides of the column 26 at the lower end of the operation panel 22.

That is, the light sources 20a and 20b and the light sources 20c and 20d are arranged at positions with different heights from the placement unit 16. That is, the light sources 20a, 20b, 20c, and 20d are disposed at positions where the angles of light hitting the subject are different from each other, and are configured to irradiate the document with light from different directions. Thereby, the discriminability between the document and the placement unit 16 is improved.

The operation panel 22 includes a display screen, and is configured to set the image forming apparatus 10. The operation panel 22 is installed on the column 26 between the placement unit 16 and the imaging device 18, at the back of the apparatus body 12.

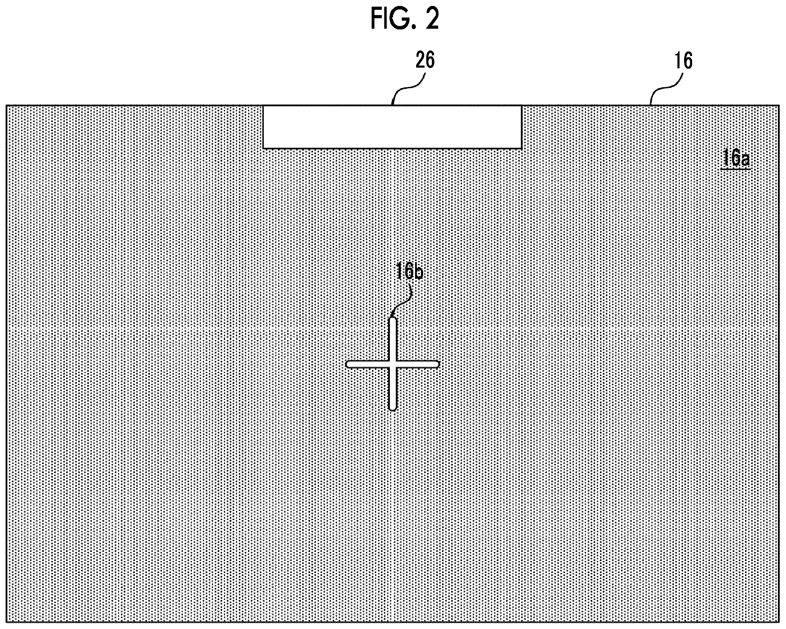

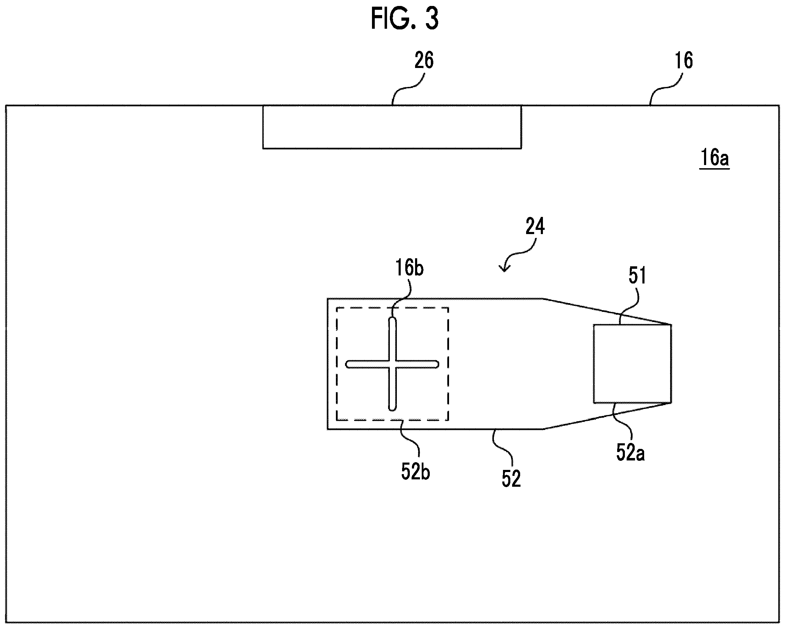

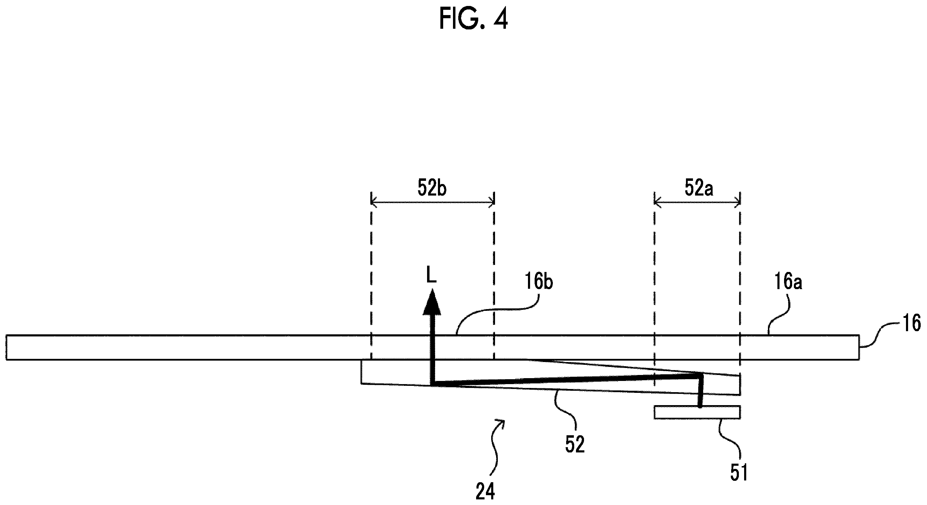

Next, the configurations of the placement unit 16 and the light emitting device 24 will be described in detail. Fig. 2 is a top view showing the appearance of the placement unit 16 and the light emitting device 24. Fig. 3 is a top view for explaining the configurations of the placement unit 16 and the light emitting device 24. Fig. 4 is a front view for explaining the configurations of the placement unit 16 and the light emitting device 24.

As shown in Fig. 2, the placement unit 16 includes a placement surface 16a on which a document is placed. Further, a light emitting portion 16b is formed at a central portion of the placement surface 16a. In the example shown in Fig. 2, the light emitting portion 16b has a cross shape as an example, but in addition, for example, any form may be used, such as a rectangle, a circle, a text, a symbol, or a combination of some of the examples.

The top surface of the apparatus body 12 which is the placement surface 16a is made of a light-transmitting resin, and a region of the placement surface 16a excluding the light emitting portion 16b is coated with a light-shielding paint of black or the like.

In the placement unit 16 configured as described above, the light emitting portion 16b appears to emit light, by emitting light from below the light emitting portion 16b with the light emitting device 24 to be described later.

In a case where a part of the outer surface of the housing is the placement unit 16 for a document, the user may not know whether to place the document on the placement unit 16. Therefore, it is possible to prompt the user to place the document on the placement unit 16, by providing the light emitting portion 16b in the placement unit 16 in this way and causing at least a part of the placement unit 16 to emit light.

The configuration of the placement unit 16 is not limited to the above configuration, and, for example, may be configured in any manner that the top surface of the apparatus body 12, configuring the placement unit 16, is made of a light-shielding resin, the light emitting portion 16b is opened on the light-shielding top surface, and the light emitting portion 16b is sealed with a light transmitting member.

As shown in Figs. 3 and 4, the light emitting device 24 is disposed at a central portion of the placement unit 16 in a case where the placement unit 16 is viewed from above. The light emitting device 24 includes a light source 51, a light guide unit 52, and the like.

The light source 51 is a light emitting element such as a Light Emitting Diode (LED) or an Organic Light Emitting Diode (OLED).

The light guide unit 52 includes a light input portion 52a and a light output portion 52b. The light guide unit 52 may have any configuration as long as the light received from the light input portion 52a is emitted from the light output portion 52b, and may be, for example, a lens formed of resin, glass, or the like, or a box body configured such that an inner surface reflects light. In the present exemplary embodiment, the light guide unit 52 is formed of a white resin, and is a box body in which the light input portion 52a and the light output portion 52b are opened.

The light source 51 is disposed at a position facing the light input portion 52a. Further, the light emitting portion 16b of the placement unit 16 is disposed at a position facing the light output portion 52b.

The light L emitted from the light source 51 enters from the light input portion 52a of the light guide unit 52, is reflected in the box body, and is emitted from the light output portion 52b. The light L emitted from the light output portion 52b is emitted from below the light emitting portion 16b of the placement unit 16. As a result, in a case where the placement unit 16 is viewed from the outside of the image forming apparatus 10, the light emitting portion 16b appears to emit light.

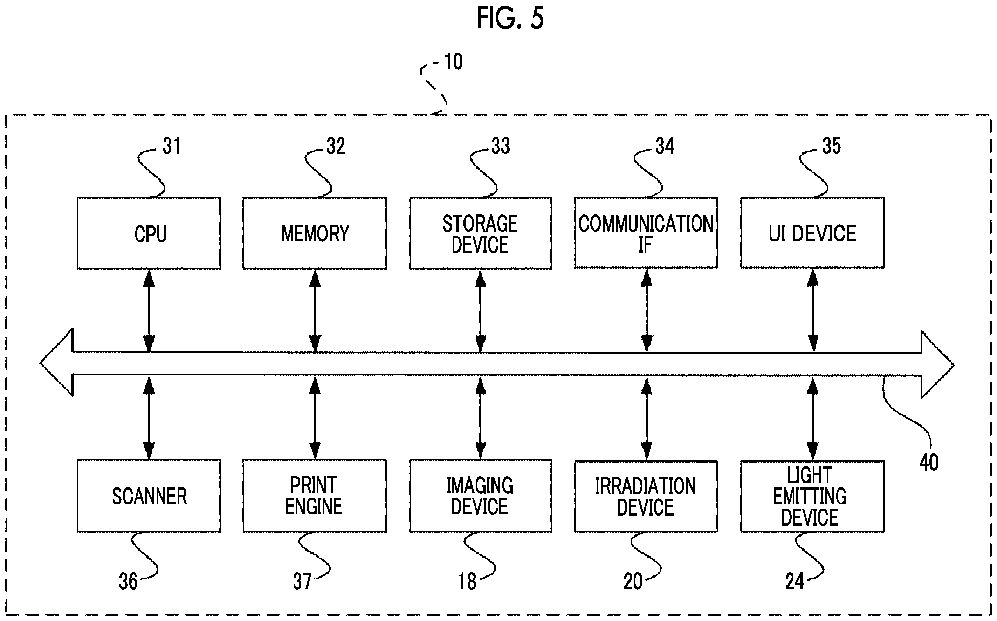

Next, the hardware configuration of the image forming apparatus 10 of the present exemplary embodiment will be described. Fig. 5 is a block diagram showing a hardware configuration of the image forming apparatus 10.

As shown in Fig. 5, the image forming apparatus 10 includes a CPU 31, a memory 32, a storage device 33 such as a hard disk drive, a communication interface (abbreviated as IF) 34 that transmits and receives data to and from an external device or the like via a network, a user interface (abbreviated as UI) device 35 including a touch panel or a liquid crystal display, and a keyboard, a scanner 36, a print engine 37, the imaging device 18, an irradiation device 20, and a light emitting device 24. These components are connected to each other via the control bus 40.

The communication IF 34 transmits and receives data to and from an external device or the like. The UI device 35 receives an instruction input from the user. The scanner 36 scans the document loaded in the image forming apparatus 10 as image data. The print engine 37 prints an image on a recording medium such as printing paper through steps such as charging, exposure, development, transfer, and fixing.

The CPU 31 is a processor that controls the operation of the image forming apparatus 10 by executing a predetermined process based on a control program stored in the memory 32 or the storage device 33. In the present exemplary embodiment, it has been described that the CPU 31 reads and executes the control program stored in the memory 32 or the storage device 33, but the present invention is not limited thereto. The control program may be provided in a form recorded on a computer-readable recording medium. For example, this program may be provided in the form recorded on an optical disk such as a compact disc (CD)-read only memory (ROM) and a digital versatile disc (DVD)-ROM, or the form recorded on a semiconductor memory such as a universal serial bus (USB) memory and a memory card. Further, the control program may be acquired from an external device via a communication line connected to the communication IF 34.

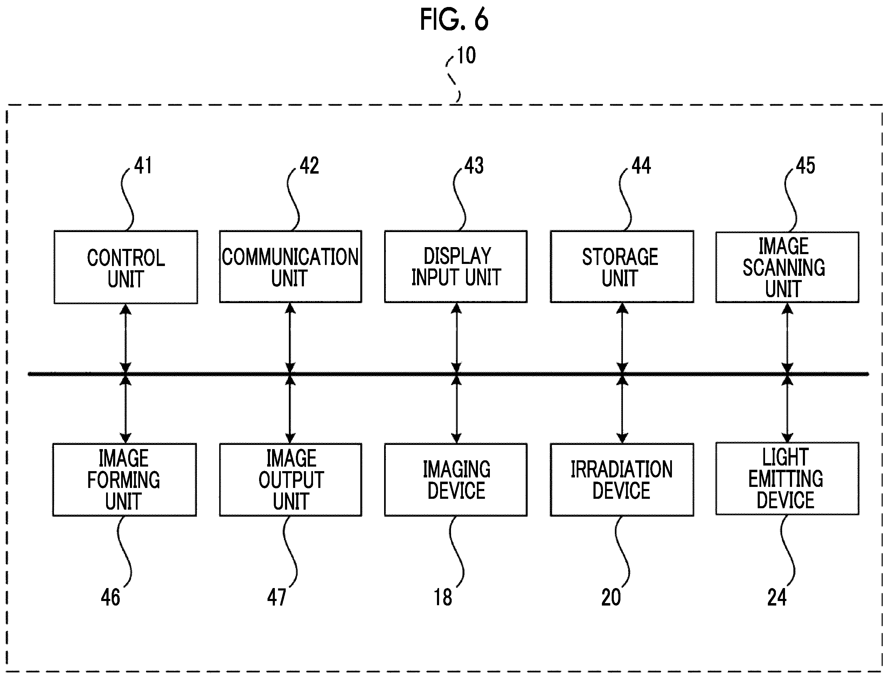

Next, the functional configuration of the image forming apparatus 10 of the present exemplary embodiment will be described. Fig. 6 is a block diagram showing a functional configuration of the image forming apparatus 10.

As shown in Fig. 6, the image forming apparatus 10 includes a control unit 41, a communication unit 42, a display input unit 43, a storage unit 44, an image scanning unit 45, an image forming unit 46, an image output unit 47, an imaging device 18, an irradiation device 20, and a light emitting device 24.

The control unit 41 controls the overall operation of the image forming apparatus 10, and in addition to controlling the light emission of the light emitting device 24, for example, based on an instruction input from the user, performs control of imaging the document by the imaging device 18, control of outputting printing data such as a document image by the image output unit 47, or the like.

The communication unit 42 transmits and receives data to and from an external device. The display input unit 43 displays various types of information on the display screen of the operation panel 22, based on the control by the control unit 41. Further, the display input unit 43 inputs various types of operation information performed by the user on the operation panel 22. The display input unit 43 is an example of a display unit in the technique of the present disclosure. The storage unit 44 stores various types of data such as image data generated by the control unit 41 in addition to the control program.

The image scanning unit 45 performs a scanning operation of scanning various documents, based on the control by the control unit 41. The image forming unit 46 forms an image to be output from the image output unit 47, based on the control by the control unit 41. The image output unit 47 outputs the image formed by the image forming unit 46 onto a recording medium such as printing paper, based on the control by the control unit 41.

In a case where it is detected that a document is placed on the placement unit 16, the image forming apparatus 10 of the present exemplary embodiment can image the document without receiving an instruction from the user. Hereinafter, such imaging is referred to as automatic imaging.

As a method of detecting that a document is placed on the placement unit 16, any detection method may be used such as detection using an image captured by the placement unit 16 by the imaging device 18, or detection by mounting a sensor for detecting that the document is placed on the placement unit 16.

In a case of the detection using an image captured by the placement unit 16 by the imaging device 18, any detection method may be used in such a manner that for example, a document image is extracted from the captured image, and in a case where the position of the document image does not change for a certain period of time, it is determined that the document is placed.

In a case where the document placed on the placement unit 16 is imaged by such automatic imaging, or in a case where a user manually images the document placed on the placement unit 16, in a case where the light emitting portion 16b of the placement unit 16 emits light, it may affect the imaging of the document.

Therefore, the control unit 41 controls the light emitting device 24 not to emit light, in a case where it is detected that the document is placed on the placement unit 16.

In the image forming apparatus 10 of the present exemplary embodiment, in a case where it is not detected that the document is placed on the placement unit 16, the control unit 41 may control the light emitting device 24 to emit light.

Further, the light emitted by the light emitting device 24 may be light emitted by blinking.

Further, the control unit 41 may control the light emitting device 24 not to emit light, in a case where the image processing apparatus is not operated for a set time or longer.

Further, the control unit 41 may control the light emitting device 24 not to emit light, in a case where a selection screen for selecting a function to be used in the image processing apparatus is displayed on the operation panel 22 which is the display input unit 43.

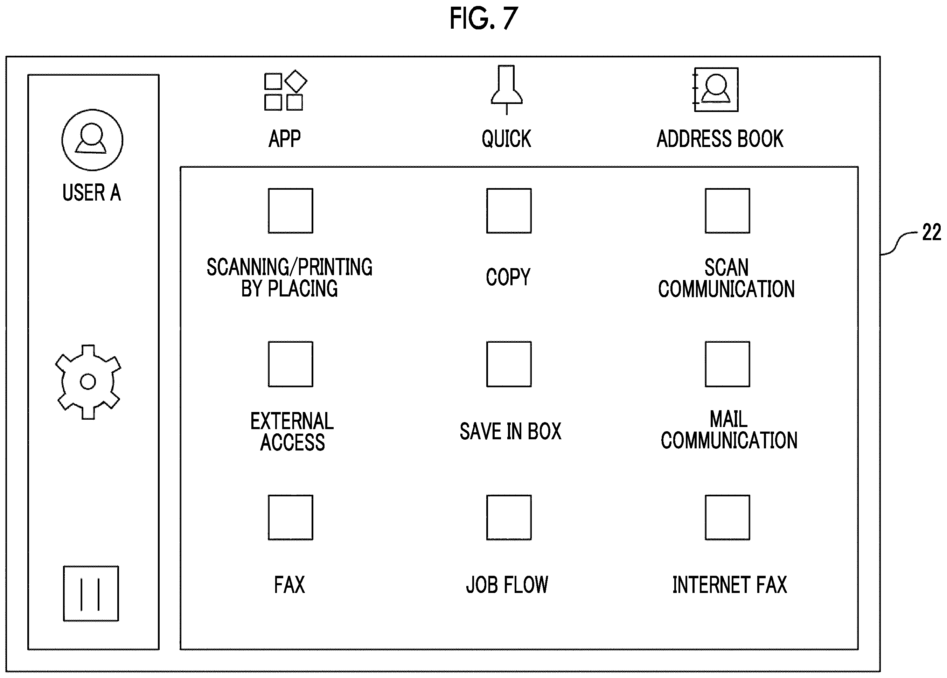

As shown in Fig. 7, for example, the selection screen is a screen configured to enable selection of a function to be used in the image processing apparatus, such as "scanning/printing by placing", "copy", and "scan transmission". In addition, in Fig. 7, the "scanning by placing" means the above automatic imaging.

Further, the control unit 41 may control the light emitting device 24 not to emit light, in a case where an operating state of the image processing apparatus is a power saving state.

In this case, in a case where the operating state of the image processing apparatus returns to a normal operating state from the power saving state, and the automatic imaging is set, the control unit 41 may control the light emitting device 24 to emit light.

Further, the control unit 41 may control the light emitting device 24 not to emit light, until an authentication process is completed, in a case where the image processing apparatus performs the authentication process of the user.

In this case, the control unit 41 may control the light emitting device 24 to emit light, in a case where the authentication process is completed and the automatic imaging is set.

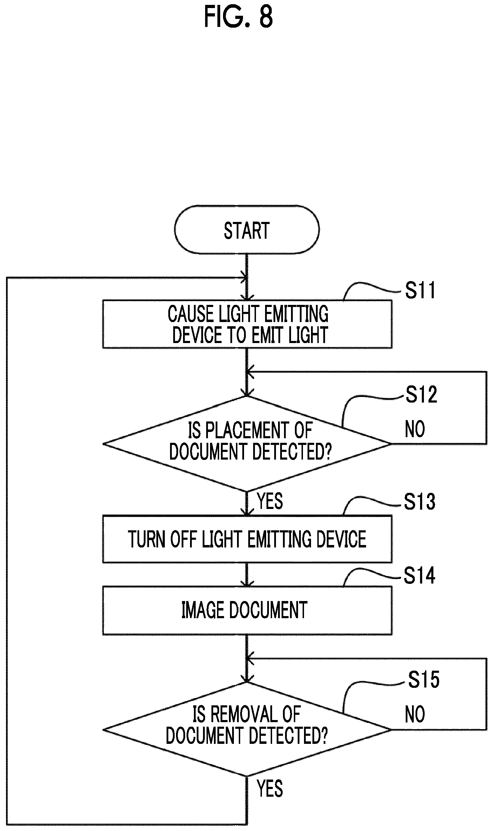

Next, a process at the time of imaging a document in the image forming apparatus 10 of the present exemplary embodiment will be described with reference to the flowchart of Fig. 8.

First, in step S11, the control unit 41 causes the light emitting device 24 to emit light in order to cause the light emitting portion 16b of the placement unit 16 to emit light.

Next, in step S12, the control unit 41 determines whether or not it has been detected that the document is placed on the placement unit 16.

In a case where it is determined in step S12 that the placement of the document is not detected, the control unit 41 repeats the determination in step S12 until the placement of the document is detected.

In a case where it is determined in step S12 that the placement of the document is detected, the control unit 41 turns off the light emitting device 24 in step S13.

Next, the control unit 41 performs the imaging of the document in step S14. Here, the imaging of the document in step S14 will be described in detail.

In a case where the placement of the document is detected, the control unit 41 displays the live view image on the display input unit 43. The user can check the state of the document while viewing the live view image. In a case where the position of the document image does not change for a certain period of time in the live view image, the control unit 41 performs the imaging of the document, and displays the acquired image of the document as a preview image on the display input unit 43. After that, in a case where an instruction to save or print the image is input from the user, the control unit 41 performs a process according to the user's instruction.

Next, in step S15, the control unit 41 determines whether or not it has been detected that the document placed on the placement unit 16 has been removed.

In a case where it is determined in step S15 that the removal of the document is not detected, the control unit 41 repeats the determination in step S15 until the removal of the document is detected.

In a case where it is determined in step S15 that the removal of the document is detected, the control unit 41 transitions to step S11 and causes the light emitting device 24 to emit light in order to cause the light emitting portion 16b of the placement unit 16 to emit light.

### [Modification Example]

Although the image forming apparatus according to the exemplary embodiment of the present invention has been described above, the present invention is not limited to the above exemplary embodiment and may be appropriately modified.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

Further, in the above exemplary embodiment, the case where the present invention is applied to the multifunction machine as the image forming apparatus has been described, but the present invention is not limited thereto, and the present invention can also be applied to various types of image processing apparatuses such as a scanner.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

10: image forming apparatus
12: apparatus body
14: discharge tray
16: placement unit
16a: placement surface
16b: light emitting portion
18: imaging device
20: irradiation device
22: operation panel
24: light emitting device
26: column
31: CPU
32: memory
33: storage device
34: communication IF
35: UI device
36: scanner
37: print engine
40: control bus
41: control unit
42: communication unit
43: display input unit
44: storage unit
45: image scanning unit
46: image forming unit
47: image output unit
51: light source
52: light guide unit
52a: light input portion
52b: light output portion

## Claims

1. An image processing apparatus (10) comprising:
a placement unit (16) that is provided on an upper surface of a housing and on which a document is placed;
an imaging unit (18) that images the placement unit (16) from above;
a light emitting device (24) that causes at least a part of the placement unit (16) to emit light; and
a processor (31),
the image processing apparatus (10) being **characterized in that** the processor (31) is configured to:
detect whether or not the document is placed on the placement unit (16) according to an image captured by the imaging unit (18), and
control the light emitting device (24) not to emit light, in a case where it is detected that the document is placed on the placement unit (16), wherein the processor (31) determines that the document is placed on the placement unit (16) when a position of a document image extracted from the captured image does not change for a period of time.

2. The image processing apparatus (10) according to claim 1, wherein the processor (31) is configured to:
control the light emitting device (24) to emit light, in a case where it is not detected that the document is placed on the placement unit (16).

3. The image processing apparatus (10) according to claim 1 or 2,
wherein light emission by the light emitting device (24) is light emission by blinking.

4. The image processing apparatus (10) according to any one of claims 1 to 3, wherein the processor (31) is configured to:
control the light emitting device (24) not to emit light, in a case where the image processing apparatus (10) is not operated for a set time or longer.

5. The image processing apparatus (10) according to any one of claims 1 to 4, wherein the processor (31) is configured to:
control the light emitting device (24) not to emit light, in a case where a selection screen for selecting a function to be used in the image processing apparatus (10) is displayed on a display unit (22, 43).

6. The image processing apparatus (10) according to any one of claims 1 to 5, wherein the processor (31) is configured to:
control the light emitting device (24) not to emit light, in a case where an operating state of the image processing apparatus (10) is a power saving state.

7. The image processing apparatus (10) according to claim 6, wherein the processor (31) is configured to:
control the light emitting device (24) to emit light, in a case where the operating state of the image processing apparatus (10) returns to a normal operating state from the power saving state, it is detected that the document is placed on the placement unit (16), and it is set to image the document without receiving an instruction from a user.

8. The image processing apparatus (10) according to any one of claims 1 to 7, wherein the processor (31) is configured to:
control the light emitting device (24) not to emit light, until an authentication process of the user is completed, in a case where the image processing apparatus (10) performs the authentication process.

9. The image processing apparatus (10) according to claim 8, wherein the processor (31) is configured to:
control the light emitting device (24) to emit light, in a case where the authentication process is completed, it is detected that the document is placed on the placement unit (16), and it is set to image the document without receiving an instruction from the user.

10. A program for controlling an image processing apparatus (10) including a placement unit (16) that is provided on an upper surface of a housing and on which a document is placed, an imaging unit (18) that images the placement unit (16) from above, a light emitting device (24) that causes at least a part of the placement unit (16) to emit light, and a processor (31), the program being **characterized by** causing a computer to execute a process comprising:
detecting whether or not the document is placed on the placement unit (16) according to an image captured by the imaging unit (18), and
controlling the light emitting device (24) not to emit light, in a case where it is detected that the document is placed on the placement unit (16), wherein the document is determined to be placed on the placement unit (16) when a position of a document image extracted from the captured image does not change for a period of time.

11. An image processing method for controlling an image processing apparatus (10) including a placement unit (16) that is provided on an upper surface of a housing and on which a document is placed, an imaging unit (18) that images the placement unit (16) from above, a light emitting device (24) that causes at least a part of the placement unit (16) to emit light, and a processor (31), the method being **characterized by** comprising:
detecting whether or not the document is placed on the placement unit (16) according to an image captured by the imaging unit (18), and
controlling the light emitting device (24) not to emit light, in a case where it is detected that the document is placed on the placement unit (16), wherein the document is determined to be placed on the placement unit (16) when a position of a document image extracted from the captured image does not change for a period of time.

## Patentansprüche

1. Bildverarbeitungsvorrichtung (10), umfassend:
eine Platzierungseinheit (16), die auf einer oberen Fläche eines Gehäuses vorgesehen ist und auf der ein Dokument platziert wird;
eine Bildgebungseinheit (18), die die Platzierungseinheit (16) von oben abbildet;
eine lichtemittierende Vorrichtung (24), die mindestens einen Teil der Platzierungseinheit (16) veranlasst, Licht zu emittieren; und
einen Prozessor (31),
wobei die Bildverarbeitungsvorrichtung (10) **dadurch gekennzeichnet ist, dass** der Prozessor (31) so konfiguriert ist, dass er:
detektiert, ob das Dokument gemäß einem von der Bildgebungseinheit (18) aufgenommenen Bild auf der Platzierungseinheit (16) platziert ist oder nicht, und
die lichtemittierende Vorrichtung (24) so steuert, dass sie in einem Fall, in dem detektiert wird, dass das Dokument auf der Platzierungseinheit (16) platziert ist, kein Licht emittiert, wobei der Prozessor (31) bestimmt, dass das Dokument auf der Platzierungseinheit (16) platziert ist, wenn sich eine Position eines aus dem aufgenommenen Bild extrahierten Dokumentenbildes für eine Zeitspanne nicht ändert.

2. Bildverarbeitungsvorrichtung (10) nach Anspruch 1, wobei der Prozessor (31) so konfiguriert ist, dass er:
die lichtemittierende Vorrichtung (24) so steuert, dass sie in einem Fall, in dem nicht detektiert wird, dass das Dokument auf der Platzierungseinheit (16) platziert ist, Licht emittiert.

3. Bildverarbeitungsvorrichtung (10) nach Anspruch 1 oder 2,
wobei Lichtemission durch die lichtemittierende Vorrichtung (24) Lichtemission durch Blinken ist.

4. Bildverarbeitungsvorrichtung (10) nach einem der Ansprüche 1 bis 3, wobei der Prozessor (31) so konfiguriert ist, dass er:
die lichtemittierende Vorrichtung (24) so steuert, dass sie in einem Fall, in dem die Bildverarbeitungsvorrichtung (10) für eine eingestellte Zeit oder länger nicht betrieben wird, kein Licht emittiert.

5. Bildverarbeitungsvorrichtung (10) nach einem der Ansprüche 1 bis 4, wobei der Prozessor (31) so konfiguriert ist, dass er:
die lichtemittierende Vorrichtung (24) so steuert, dass sie in einem Fall, in dem ein Auswahlbildschirm zum Auswählen einer Funktion, die in der Bildverarbeitungsvorrichtung (10) zu verwenden ist, auf einer Anzeigeeinheit (22, 43) angezeigt wird, kein Licht emittiert.

6. Bildverarbeitungsvorrichtung (10) nach einem der Ansprüche 1 bis 5, wobei der Prozessor (31) so konfiguriert ist, dass er:
die lichtemittierende Vorrichtung (24) so steuert, dass sie in einem Fall, in dem ein Betriebszustand der Bildverarbeitungsvorrichtung (10) ein Stromsparzustand ist, kein Licht emittiert.

7. Bildverarbeitungsvorrichtung (10) nach Anspruch 6, wobei der Prozessor (31) so konfiguriert ist, dass er:
die lichtemittierende Vorrichtung (24) so steuert, dass sie Licht emittiert, in einem Fall, in dem der Betriebszustand der Bildverarbeitungsvorrichtung (10) von dem Stromsparzustand in einen normalen Betriebszustand zurückkehrt, detektiert wird, dass das Dokument auf der Platzierungseinheit (16) platziert ist, und sie so eingestellt ist, dass sie das Dokument abbildet, ohne eine Anweisung von einem Benutzer zu empfangen.

8. Bildverarbeitungsvorrichtung (10) nach einem der Ansprüche 1 bis 7, wobei der Prozessor (31) so konfiguriert ist, dass er:
die lichtemittierende Vorrichtung (24) so steuert, dass sie kein Licht emittiert, bis ein Authentifizierungsprozess des Benutzers abgeschlossen ist, in einem Fall, in dem die Bildverarbeitungsvorrichtung (10) den Authentifizierungsprozess durchführt.

9. Bildverarbeitungsvorrichtung (10) nach Anspruch 8, wobei der Prozessor (31) so konfiguriert ist, dass er:
die lichtemittierende Vorrichtung (24) so steuert, dass sie Licht emittiert, in einem Fall, in dem der Authentifizierungsprozess abgeschlossen ist, detektiert wird, dass das Dokument auf der Platzierungseinheit (16) platziert ist, und sie so eingestellt ist, dass es das Dokument abbildet, ohne eine Anweisung von dem Benutzer zu empfangen.

10. Programm zum Steuern einer Bildverarbeitungsvorrichtung (10), die eine Platzierungseinheit (16), die an einer oberen Fläche eines Gehäuses vorgesehen ist und auf der ein Dokument platziert ist, eine Bildgebungseinheit (18), die die Platzierungseinheit (16) von oben abbildet, eine lichtemittierende Vorrichtung (24), die mindestens einen Teil der Platzierungseinheit (16) veranlasst, Licht zu emittieren, und einen Prozessor (31) enthält, wobei das Programm **dadurch gekennzeichnet ist, dass** es einen Computer veranlasst, einen Prozess auszuführen, der umfasst:
Detektieren, ob das Dokument auf der Platzierungseinheit (16) platziert ist oder nicht, gemäß einem von der Bildgebungseinheit (18) aufgenommenen Bild, und
Steuern der lichtemittierenden Vorrichtung (24), dass sie in einem Fall, in dem detektiert wird, dass das Dokument auf der Platzierungseinheit (16) platziert ist, kein Licht emittiert, wobei bestimmt wird, dass das Dokument auf der Platzierungseinheit (16) platziert ist, wenn eine Position eines aus dem aufgenommenen Bild extrahierten Dokumentenbildes sich für eine Zeitspanne nicht ändert.

11. Bildverarbeitungsverfahren zum Steuern einer Bildverarbeitungsvorrichtung (10), die eine Platzierungseinheit (16), die an einer oberen Fläche eines Gehäuses vorgesehen ist und auf der ein Dokument platziert ist, eine Bildgebungseinheit (18), die die Platzierungseinheit (16) von oben abbildet, eine lichtemittierende Vorrichtung (24), die mindestens einen Teil der Platzierungseinheit (16) veranlasst, Licht zu emittieren, und einen Prozessor (31) enthält, wobei das Verfahren **dadurch gekennzeichnet ist, dass** es umfasst:
Detektieren, ob das Dokument auf der Platzierungseinheit (16) platziert ist oder nicht, gemäß einem von der Bildgebungseinheit (18) aufgenommenen Bild, und
Steuern der lichtemittierenden Vorrichtung (24), dass sie in einem Fall, in dem detektiert wird, dass das Dokument auf der Platzierungseinheit (16) platziert ist, kein Licht emittiert, wobei bestimmt wird, dass das Dokument auf der Platzierungseinheit (16) platziert ist, wenn eine Position eines aus dem aufgenommenen Bild extrahierten Dokumentenbildes sich für eine Zeitspanne nicht ändert.

## Revendications

1. Appareil de traitement d'images (10) comprenant :
une unité de placement (16) qui est prévue sur une surface supérieure d'un boîtier et sur laquelle un document est placé ;
une unité d'imagerie (18) qui image l'unité de placement (16) depuis le dessus ;
un dispositif d'émission de lumière (24) qui amène au moins une partie de l'unité de placement (16) à émettre de la lumière ; et
un processeur (31),
l'appareil de traitement d'images (10) étant **caractérisé en ce que** le processeur (31) est configuré pour :
détecter si le document est placé ou non sur l'unité de placement (16) en fonction d'une image capturée par l'unité d'imagerie (18), et
contrôler le dispositif d'émission de lumière (24) de ne pas émettre de lumière, dans un cas où il est détecté que le document est placé sur l'unité de placement (16), dans lequel le processeur (31) détermine que le document est placé sur l'unité de placement (16) lorsqu'une position d'une image de document extraite de l'image capturée ne change pas pendant une période de temps.

2. Appareil de traitement d'images (10) selon la revendication 1, dans lequel le processeur (31) est configuré pour :
contrôler le dispositif d'émission de lumière (24) d'émettre de la lumière, dans un cas où il n'est pas détecté que le document est placé sur l'unité de placement (16).

3. Appareil de traitement d'images (10) selon la revendication 1 ou la revendication 2, dans lequel l'émission de lumière par le dispositif d'émission de lumière (24) est une émission de lumière par clignotement.

4. Appareil de traitement d'images (10) selon l'une quelconque des revendications 1 à 3, dans lequel le processeur (31) est configuré pour :
contrôler le dispositif d'émission de lumière (24) de ne pas émettre de lumière, dans un cas où l'appareil de traitement d'images (10) n'est pas utilisé pendant une durée définie ou plus.

5. Appareil de traitement d'images (10) selon l'une quelconque des revendications 1 à 4, dans lequel le processeur (31) est configuré pour :
contrôler le dispositif d'émission de lumière (24) de ne pas émettre de lumière, dans un cas où un écran de sélection permettant de sélectionner une fonction à utiliser dans l'appareil de traitement d'images (10) est affiché sur une unité d'affichage (22, 43).

6. Appareil de traitement d'images (10) selon l'une quelconque des revendications 1 à 5, dans lequel le processeur (31) est configuré pour :
contrôler le dispositif d'émission de lumière (24) de ne pas émettre de lumière, dans un cas où un état de fonctionnement de l'appareil de traitement d'images (10) est un état d'économie d'énergie.

7. Appareil de traitement d'images (10) selon la revendication 6, dans lequel le processeur (31) est configuré pour :
contrôler le dispositif d'émission de lumière (24) d'émettre de la lumière, dans un cas où l'état de fonctionnement de l'appareil de traitement d'images (10) revient à un état de fonctionnement normal à partir de l'état d'économie d'énergie, il est détecté que le document est placé sur l'unité de placement (16), et il est réglé pour imager le document sans recevoir d'instruction d'un utilisateur.

8. Appareil de traitement d'images (10) selon l'une quelconque des revendications 1 à 7, dans lequel le processeur (31) est configuré pour :
contrôler le dispositif d'émission de lumière (24) de ne pas émettre de lumière, jusqu'à ce qu'un processus d'authentification de l'utilisateur soit terminé, dans un cas où l'appareil de traitement d'images (10) effectue le processus d'authentification.

9. Appareil de traitement d'images (10) selon la revendication 8, dans lequel le processeur (31) est configuré pour :
contrôler le dispositif d'émission de lumière (24) d'émettre de la lumière, dans un cas où le processus d'authentification est terminé, il est détecté que le document est placé sur l'unité de placement (16), et il est réglé pour imager le document sans recevoir d'instruction de l'utilisateur.

10. Programme pour contrôler un appareil de traitement d'images (10) incluant une unité de placement (16) qui est prévue sur une surface supérieure d'un boîtier et sur laquelle un document est placé, une unité d'imagerie (18) qui image l'unité de placement (16) depuis le dessus, un dispositif d'émission de lumière (24) qui amène au moins une partie de l'unité de placement (16) à émettre de la lumière, et un processeur (31), le programme étant **caractérisé en ce qu'**il amène un ordinateur à exécuter un processus comprenant :
détecter si le document est placé ou non sur l'unité de placement (16) en fonction d'une image capturée par l'unité d'imagerie (18), et
contrôler le dispositif d'émission de lumière (24) de ne pas émettre de lumière, dans un cas où il est détecté que le document est placé sur l'unité de placement (16), dans lequel le document est déterminé comme étant placé sur l'unité de placement (16) lorsqu'une position d'une image de document extraite de l'image capturée ne change pas pendant une période de temps.

11. Procédé de traitement d'images pour contrôler un appareil de traitement d'images (10) incluant une unité de placement (16) qui est prévue sur une surface supérieure d'un boîtier et sur laquelle un document est placé, une unité d'imagerie (18) qui image l'unité de placement (16) depuis le dessus, un dispositif d'émission de lumière (24) qui amène au moins une partie de l'unité de placement (16) à émettre de la lumière, et un processeur (31), le procédé étant **caractérisé en ce qu'**il comprend :
détecter si le document est placé ou non sur l'unité de placement (16) en fonction d'une image capturée par l'unité d'imagerie (18), et
contrôler le dispositif d'émission de lumière (24) de ne pas émettre de lumière, dans un cas où il est détecté que le document est placé sur l'unité de placement (16), dans lequel le document est déterminé comme étant placé sur l'unité de placement (16) lorsqu'une position d'une image de document extraite de l'image capturée ne change pas pendant une période de temps.
